# EUROPÄISCHE PATENTSCHRIFT

(11) **EP 2 582 970 B1**
(45) Veröffentlichungstag und Bekanntmachung des Hinweises auf die Patenterteilung: **02.04.2014**
(21) Anmeldenummer: 11735609.7
(22) Anmeldetag: 20.06.2011
(51) Int. Cl.: F03D 7/02

(54) **MESSVERFAHREN ZUR KONTROLLE UND/ODER OPTIMIERUNG VON WINDENERGIEANLAGEN MIT EINEM BERÜHRUNGSLOSEN ABSTANDSMESSSYSTEM**
MEASUREMENT METHOD FOR MONITORING AND/OR OPTIMIZING WIND POWER PLANTS HAVING A NON-CONTACTING DISTANCE MEASUREMENT SYSTEM
PROCÉDÉ DE MESURE POUR LE CONTRÔLE ET/OU L'OPTIMISATION D'ÉOLIENNES GRÂCE À UN SYSTÈME DE MESURE DE DISTANCE SANS CONTACT

(30) Priorität: 21.06.2010 DE 102010024532
(43) Veröffentlichungstag der Anmeldung: 24.04.2013
(73) Patentinhaber: WINDCOMP GmbH, 20146 Hamburg (DE)
(72) Erfinder: LUCKS, Christoph, 20146 Hamburg (DE)
(74) Vertreter: Raffay & Fleck
(86) Internationale Anmeldenummer: PCT/EP2011/060241
(87) Internationale Veröffentlichungsnummer: WO 2011/161058

(56) Entgegenhaltungen:
- EP-A1- 1 772 622
- DE-A1-102006 054 667
- DE-A1-102008 013 392
- DE-C1- 10 032 314

## Beschreibung

### Technisches Gebiet

Die vorliegende Erfindung betrifft ein Messverfahren zur Kontrolle und/oder Optimierung von Windenergieanlagen mit einem berührungslosen Abstandmesssystem.

### Stand der Technik

Derartige Systeme sind aus dem Stand der Technik bekannt, um beispielsweise eine Kollision eines Rotorblattes mit einem Turm zu verhindern. Auch ist es beispielsweise bekannt, ein Profil über ein Rotorblatt aufzunehmen. So lehrt die DE 100 32 314 aus einem solchen Profil über ein Rotorblatt den Pitchwinkel zu bestimmen.

Derartige Messverfahren sind jedoch nur in der Lage, ganz gezielt einzelne sehr wesentliche Parameter für den Betrieb der Windenergieanlage zu ermitteln und insbesondere deren gefahrlosen Betrieb sicherzustellen.

### Darstellung der Erfindung

Aufgabe der vorliegenden Erfindung ist es, ein Messverfahren anzugeben, das detaillierte Aussagen über den Zustand zumindest eines Rotorblattes erlaubt und dadurch eine Optimierung der Betriebsweise der Windenergieanlage bzw. ein frühzeitiges Erkennen von Materialfehlern oder Materialabweichungen ermöglicht.

Gelöst wird diese Aufgabe durch ein Messverfahren gemäß Anspruch 1 sowie durch eine Windenergieanlage gemäß Anspruch 10. Die abhängigen Unteransprüche 2 bis 9 geben vorteilhafte Weiterbildungen an.

Ein erfindungsgemäßes Messverfahren zur Kontrolle und/oder Optimierung von Windenergieanlagen, aufweisend mindestens ein längliches, an einer Nabe gelagertes Rotorblatt, umfasst das Ausrichten eines berührungslosen Abstandsmesssystems auf mindestens zwei Messpunkte, die von dem mindestens einem Rotorblatt überstrichen werden und unterschiedliche Abstände zur Nabe aufweisen. Dabei ist das berührungslose Abstandsmesssystem geeignet, an verschiedenen Messpunkten um maximal 200 Millisekunden zeitversetzt Abstände zu erfassen.

Das Verfahren umfasst weiter das Bestimmen von mindestens zwei Profilen über das mindestens eine Rotorblatt entlang jeweils einer Profillinie, wobei die mindestens zwei Profillinien über die Punkte des Rotorblattes verlaufen, die die mindestens zwei Messpunkte überstreichen.

Somit werden über das Verfahren mindestens zwei Profile über mindestens zwei Profillinien über das mindestens eine Rotorblatt erfasst. Über solche mindestens zwei Profillinien lassen sich zahlreiche Aussagen über den Betriebszustand bzw. das Rotorblatt generieren, wie die weiteren Ausführungen beispielhaft aufzeigen. Auch ist eine Diagnose von Fehlern der Fertigung und des Aufbaus möglich. Dabei sind die Aussagen, die auf mindestens zwei Profillinien basieren, denen, die allein auf einzelnen Abstandsmessungen bzw. auf einem einzelnen Profil über ein Rotorblatt fußen, deutlich überlegen. So kann auf einfache Weise eine sehr aussagekräftige Datenbasis über ein Rotorblatt bzw. den Betriebszustand gewonnen werden.

Dabei kann eine berührungslose Abstandsmessung beispielsweise über einen Laser durchgeführt werden. Denkbar ist hier eine Laufzeitmessung durchzuführen. Dabei kann das berührungslose Abstandsmesssystem dadurch zur zeitversetzten Erfassung an den mindestens zwei Messpunkte ausgerüstet werden, dass es über kipp- und/oder schwenkbare Spiegel zur entsprechenden Ablenkung des Laserstrahls verfügt. Alternativ können auch mehrere Laser mit entsprechenden Messsystemen zur Abstandsmessung vorgesehen werden, so dass die Messungen gleichzeitig durchgeführt werden können.

Bei der zeitversetzten Erfassung an zwei Messpunkten mit höchsten 200 Millisekunden Abstand zur Erfassung von zwei Profilen, kommt es darauf an, dass bei der Passage eines Rotorblattes ausreichend viele Messpunkte genommen werden können, um ein aussagekräftige Profile zu erstellen. Dies ist bei üblichen Betriebsbedingungen einer Windenergieanlage dann gegeben, wenn die Messung an zwei Messpunkten in einem Abstand von höchsten 200 Millisekunden erfolgen kann. Bei Windenergieanlagen mit hohen Rotationsgeschwindigkeiten bzw. langen Flügellängen kann eine deutlich schnellere Erfassung notwendig sein, insbesondere dann, wenn Profillinien am äußeren Ende der Rotorblätter erfasst werden sollen. Hier kann eine zeitversetzte Messung mit höchsten 5 Millisekunden Zeitverzögerung angebracht sein. Je mehr Messwerte pro Profil erfasst werden sollen, umso schneller müssen derartige Messungen erfolgen. In der Regel werden mindestens 10 Messwerte pro Profil erfasst werden müssen, um eine aussagekräftiges Profil erzeugen zu können. Werden mehr als zwei Profillinien erfasst, ist der Abstand der Messungen entsprechend kleiner zu wählen. Die genannte Bedingung kann in der Regel dann erfüllt werden, wenn pro zu erfassendem Profil innerhalb von 200 ms eine Messung durchgeführt werden kann. Wie oben beschrieben kann das Zeitintervall bei besonderen Anlagen oder weit außen am Rotorblatt liegenden Profillinien deutlich geringer zu wählen sein.

Unter einem Messpunkt ist hier die Ausrichtung des berührungslosen Abstandmesssystems in einer Richtung zu verstehen, die vom Rotorblatt gekreuzt wird. Der Messpunkt ist somit nicht ein realer Punkt des Rotorblatts, sondern vielmehr eine Linie, in der das Abstandmesssystem ausgerichtet ist und die vom Rotorblatt gekreuzt wird. Die Punkte der Oberfläche des Rotorblatts, die die Linie kreuzen bilden eine Profillinie, auf der die einzelnen Abstandsmessungen vorgenommen werden.

Vorteilhafter Weise sind die mindestens zwei Messpunkte so gewählt, dass sie gleichzeitig vom Rotorblatt überstrichen werden. Hat das Rotorblatt an den unterschiedlichen Messpunkten aufgrund seiner Umfanggeschwindigkeit und Breite verschiedene Passagezeiten, so reicht es aus, wenn die Messpunkte zu einem Zeitfenster vom Rotorblatt gleichzeitig überstrichen werden. Vorteilhafter Weise liegen mindestens zwei Messpunkte auf einer Linie ausgehend von der Nabe.

Vorteilhafter Weise wird das Messverfahren so durchgeführt, dass über jedes Rotorblatt zumindest zwei Profile mit unterschiedlichem Abstand zur Nabe aufgenommen werden. Dabei werden diese Profile vorteilhafter Weise an den gleichen mindestens zwei Messpunkten mit unterschiedlichem Abstand zur Nabe genommen. Somit werden die Profile über die verschiedenen Rotorblätter zeitversetzt bei der jeweiligen Passage über die Messpunkte genommen.

Mit Vorteil werden bei mehreren Umdrehungen des Rotors pro Rotorblatt und pro Profillinie mehrere Profile aufgenommen und bei zumindest ähnlichen Betriebsbedingungen der Windenergieanlage jeweils über die Profile einer Profillinie eines Rotorblattes gemittelt bevor darauf basierend weitere Analysen durchgeführt beziehungsweise Aussagen generiert werden.

Mit besonderem Vorteil umfasst das Messverfahren das Ermitteln mindestens einer Biegung, Steifigkeit und/oder Torsion des mindestens einen Rotorblattes auf Basis der mindestens zwei Profile mit unterschiedlichem Abstand zur Nabe.

Bei einer solchen Verwendung der ursprünglichen Messdaten zur Ermittlung dieser Eigenschaften kommen die Vorteile des erfindungsgemäßen Verfahren besonders deutlich zu tage.

Beispielsweise bezüglich der Steifigkeit kann bei einer Abstandsmessung lediglich an einem Punkt nur eine sehr generelle Aussage über die Steifigkeit des Rotorblattes getroffen werden. Bei einer Erfassung von mindestens zwei Profilen mit unterschiedlichem Abstand zur Nabe kann bezüglich der Steifigkeit sowohl eine Aussage in den verschiedenen Richtungen der möglichen Biegung bzw. Torsion des Rotorblattes generiert werden als auch verschiedene Aussagen bezüglich verschiedener Abschnitte des Rotorblattes.

Besonders vorteilhaft weist das erfindungsgemäße Messverfahren den Schritt auf, dass die edgewise und/oder flapwise Biegung des mindestens einen Rotorblattes zwischen den mindestens zwei Profilen bestimmt wird. Unter der edgewise Biegung ist die Biegung des Rotorblattes innerhalb seiner Rotationsebene zu verstehen. Unter der flapwise Biegung ist die Biegung senkrecht dazu zu verstehen.

Bei diesen Biegungen handelt es sich um wesentliche Aussagen bezüglich des Rotorblattes und des Betriebszustandes, so dass die durch die Aufnahme von zumindest zwei Profilen mit unterschiedlichem Abstand zur Nabe gesteigerte Genauigkeit des Verfahrens hier besonders zum Tragen kommt.

Vorteilhafter Weise wird gemäß Anspruch 4 die Torsion zwischen den mindestens zwei Profilen mit unterschiedlichem Abstand zur Nabe bestimmt.

Die Bestimmung der Torsion bietet nicht nur Aufschluss über die Steifigkeit und den Alterungszustand eines Rotorblattes, sondern stellt auch einen für den Betrieb der Windenergieanlage wichtigen Parameter dar. Denn durch eine solche Torsion besitzt ein Rotorblatt nicht einen generellen Pitchwinkel, sondern einen vom Ort auf dem Rotorblatt abhängigen Pitchwinkel. Da der Pitchwinkel in der Regel ein Parameter der Steuerung der Windenergieanlage ist, bietet es sich hier an, Rücksicht auf die durch Alterung bzw. Windlast auftretenden unterschiedlichen Pitchwinkel über den Blattverlauf zu nehmen und dadurch die Steuerung zu optimieren.

Vorteilhafterweise wird gemäß Anspruch 5 auf Basis mindestens eines Profils die Pitchachse des Rotorblattes bestimmt. Aufgrund des Profils kann beispielsweise aufgrund von Herstellerdaten oder von vorherigen Messungen die Pitchachse des Blattes bestimmt werden. Dies kann beispielsweise durch Ermittlung von zwei Fixpunkten auf dem Profil erfolgen, die eine bekannte Lage zur Pitchachse aufweisen.

Die Bestimmung der Pitchachse bietet eine überraschend gute Bezugsgröße, um verschiedene Profile über ein Rotorblatt miteinander zu vergleichen. Bei einer solchen Darstellung bzw. eine darauf bezogene Berechnung können Abweichungen vom Sollzustand besonders deutlich erkannt werden.

Dabei werden die einzelnen Profile so übereinander gelegt, dass ihre Pitchachsen übereinander liegen. Sodann kann beispielsweise der Anstellwinkel der einzelnen Profile zueinander bestimmt werden.

Vorteilhafter Weise wird der Konuswinkel des mindestens einen Rotorblattes bestimmt. Unter Konuswinkel ist der Winkel eines Rotorblatts zu verstehen, der zwischen der Längsachse des Rotorblatt und einer auf der Rotordrehachse senkrechten Ebene eingeschlossen wird.

Eine solche Bestimmung des Konuswinkels bietet die Möglichkeit, andere Daten unabhängig von Fehlern im Konuswinkel miteinander zu vergleichen.

Vorteilhafter Weise wird, wenn die Windenergieanlage mindestens zwei Rotorblätter umfasst, die Teilung, insbesondere die Abweichung von der vorgesehenen Teilung, bestimmt. Unter der Teilung ist die Verteilung der Rotorblätter auf die Rotationsebene, also die Verteilung der Rotorblätter im Kreis zu verstehen.

Bei drei Rotorblättern wird in der Regel eine Teilung von 120° vorgesehen. Im Betrieb kann es jedoch zu Abweichungen kommen, die beispielsweise eine Unwucht hervorrufen können. Solche können durch das beschriebene Verfahren besonders leicht erfasst werden, da nach Vermessen des Profils die Hinterkante des Rotorblattes besonders einfach und zuverlässig bestimmbar ist.

In einer vorteilhaften Ausführung wird, wenn die Windenergieanlage eine Gondel umfasst, das Abstandsmesssystem auf der Gondel positioniert. Bei einer solchen Positionierung ist es vorteilhaft, auch die Turmschwingungen zu erfassen. Dies ist beispielsweise durch Schwingungssensoren möglich. Denn Turmschwingungen wirken sich auch auf die Rotorblätter aus und können vorteilhafter Weise mit in die Berechnung einbezogen werden. Soll beispielsweise die Steifigkeit eines Rotorblattes bestimmt werden, können die durch die Turmschwingungen hervorgerufenen Verformungen herausgerechnet oder besonders beurteilt werden.

In einer anderen Ausführung wird das Abstandsmesssystem entfernt von der Windenergieanlage und vor der Windenergieanlage positioniert. Vor der Windenergieanlage bedeutet, dass es mit Blick auf die Nabe der Windenergieanlage, bei optimaler Ausrichtung der Windenergieanlage also auf der Luvseite, angeordnet ist. Dies bedeutet jedoch, dass die Windenergieanlage während der Messung in eine Richtung ausgerichtet sein muss. Die Durchführung des Verfahrens auf diese Art bietet sich insbesondere dann an, wenn nur zu vereinzelten Zeitpunkten entsprechende Messungen durchgeführt werden sollen.

Dabei ist es besonders vorteilhaft, wenn der Abstand des Messsystems zur Nabe bestimmt und/oder der Abstand zu einem Punkt des Turms und die Neigung des Turms gemessen werden. Durch eine solche Bestimmung des Abstandes sind auch absolute Aussagen über die Rotorblätter möglich bzw. können Turmschwingungen, die bei einem vor der Windanlage positionierten System deutlich größere Auswirkungen haben, herausgerechnet werden. Dabei können der Abstand zur Nabe oder zum Turm und die Neigung des Turmes auf verschiedene Weise bestimmt werden. Beispielsweise ist es vorstellbar, die Abstände mit dem gleichen Abstandsmesssystem zu erfassen. Auch kann die Neigung des Turmes durch zwei Abstandsmessungen an unterschiedlichen Höhen des Turmes erzielt werden.

Auch kann mit Vorteil eine Erfassung von mindestens zwei Profilen jeweils von vor der Windenergieanlage und von der Gondel aus durchgeführt werden. Die Vermessung der Lage des Turms an einer Höhe kann insbesondere bei runden oder ovalen Formen durch zwei auf eine Höhe des Turms gerichtete Abstandsmesssysteme oder eines zur entsprechend zeitversetzten Erfassung erfolgen. Dabei werden die Abstände an zwei auf den Turm auf gleicher Höhe gerichtete Messlinien bestimmt. Bewegt sich der Turm vom Messsystem weg vergrößern sich beide Abstände, verlagert er sich zur Seite, vergrößert sich aufgrund der runden/ovalen Turmform einer, während der andere sich verkleinert.

Eine erfindungsgemäße Windenergieanlage weist ein Messsystem zur Kontrolle und/oder Optimierung der Windenergieanlage auf. Dieses Messsystem umfasst ein berührungsloses Abstandsmesssystem, aufweisend Ausrichtungsmittel zur Ausrichtung auf mindestens zwei Messpunkte mit unterschiedlichem Abstand zur Nabe, die von dem mindestens einen Rotorblatt überstrichen werden. Das berührungsloses Abstandsmesssystem ist geeignet zur zeitgleichen Erfassung von mindestens zwei Profilen über das mindestens eine Rotorblatt entlang jeweils einer Profillinie durch um maximal 200 Millisekunden zeitversetzte Erfassung von Abständen an den mindestens zwei Messpunkten, wobei die mindestens zwei Profillinien über die Punkte des Rotorblattes verlaufen, die die mindestens zwei Messpunkte überstreichen.

Eine solche Windenergieanlage ist ausgerüstet mit einem System zur Durchführung des erfindungsgemäßen Verfahrens. Die weiteren vorteilhaften Ausbildungen der Unteransprüche 2 bis 9 können hier entsprechend umgesetzt werden.

Wird eine Windenergieanlage mit einem solchen System ausgestattet, können die entsprechenden Messungen im kontinuierlichen Betrieb durchgeführt werden und somit entscheidende Daten zur Optimierung der Windenergieanlage bei verschiedenen Windrichtungen und Lastsituationen gewonnen werden. Darüber hinaus ist eine kontinuierliche Kontrolle der Rotorblätter und ein frühzeitiges Erkennen von erwarteten Strukturwerten möglich. Auch ist eine Diagnose von Fehlern der Fertigung und des Aufbaus möglich.

### Kurze Beschreibung der Zeichnungen

Weitere vorteilhafte Ausführungsformen und Vorteile sollen im Folgenden anhand von schematischen Zeichnungen beschrieben werden. Die Figuren zeigen im Einzelnen:
Fig. 1 eine Ansicht einer Windenergieanlage mit erfindungsgemäßem Abstandsmesssystem, positioniert auf einer Gondel;
Fig. 2 eine Ansicht einer Windenergieanlage mit erfindungsgemäßem Abstandsmesssystem, positioniert vor der Windenergieanlage;
Fig. 3 eine Ansicht eines Flügels mit zwei Profillinien;
Fig. 4a eine Ansicht einer Windenergieanlage mit einem alternativen Messsystem;
Fig. 4b eine Ansicht einer Windenergieanlage mit einer weiteren alternativen Messanordnung;
Fig. 5 eine Ansicht der edgewise Biegung;
Fig. 6 eine Ansicht der flapwise Biegung;
Fig. 7 eine detaillierte Vermessung mit drei Profilen;
Fig. 8 eine Ansicht der Turmvermessung;
Fig. 9 eine Ansicht der Vermessung relativ zum Turm mit zwei Profilen; und
Fig. 10 eine Ansicht von Messwerten.

### Weg(e) zur Ausführung der Erfindung

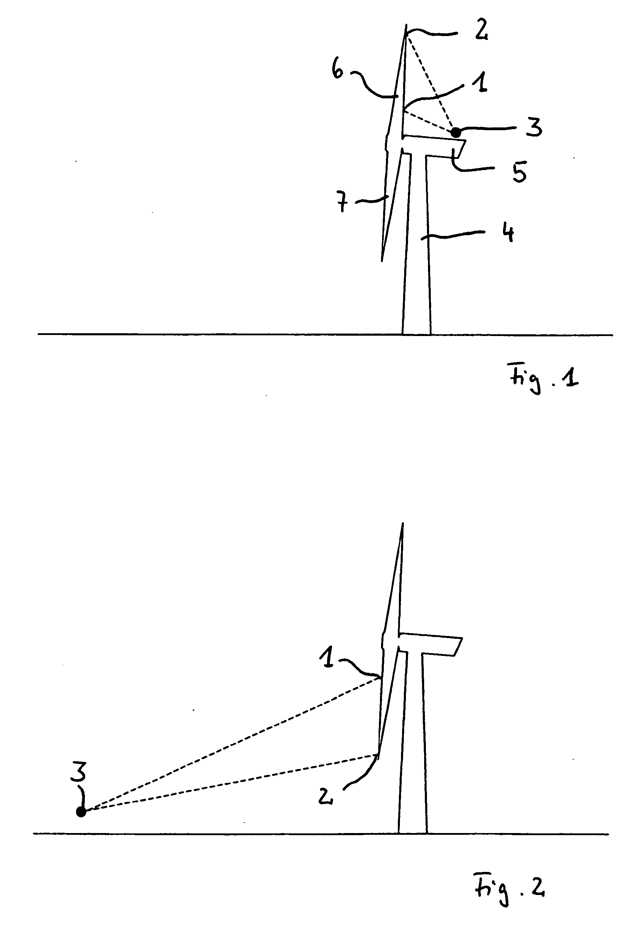

Fig. 1 zeigt eine Windenergieanlage mit Turm 4 und Gondel 5 und zwei Rotorblättern 6 und 7. Auf der Gondel 5 angeordnet ist ein berührungsloses Abstandsmesssystem 3 ausgerichtet auf einen ersten Messpunkt 1 und einen zweiten Messpunkt 2, die gerade vom Rotorblatt 6 überstrichen werden. Beim weiteren Drehen der Nabe werden die Rotorblätter 6 und 7 soweit verdreht, dass die Messpunkte 1, 2 anschließend vom Rotorblatt 7 überstrichen werden.

Fig. 2 zeigt eine Windenergieanlage, die in Fig. 1 jedoch mit einem etwa 100 m vor der Windenergieanlage angeordneten Messsystem 3, das ausgerichtet ist auf einen ersten Messpunkt 1 und auf einen zweiten Messpunkt 2.

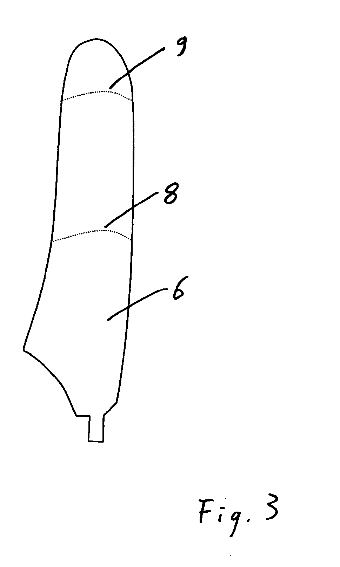

Fig. 3 zeigt eine Ansicht eines Rotorblattes 6 mit durch gestrichelte Linien angedeuteten Profillinien 8 und 9. Diese Profillinien 8 und 9 verlaufen leicht gebogen über das Rotorblatt 6. Dies liegt daran, dass das Rotorblatt 6 kreisförmig um die Nabe umläuft, während die Messpunkte im Ort fix sind.

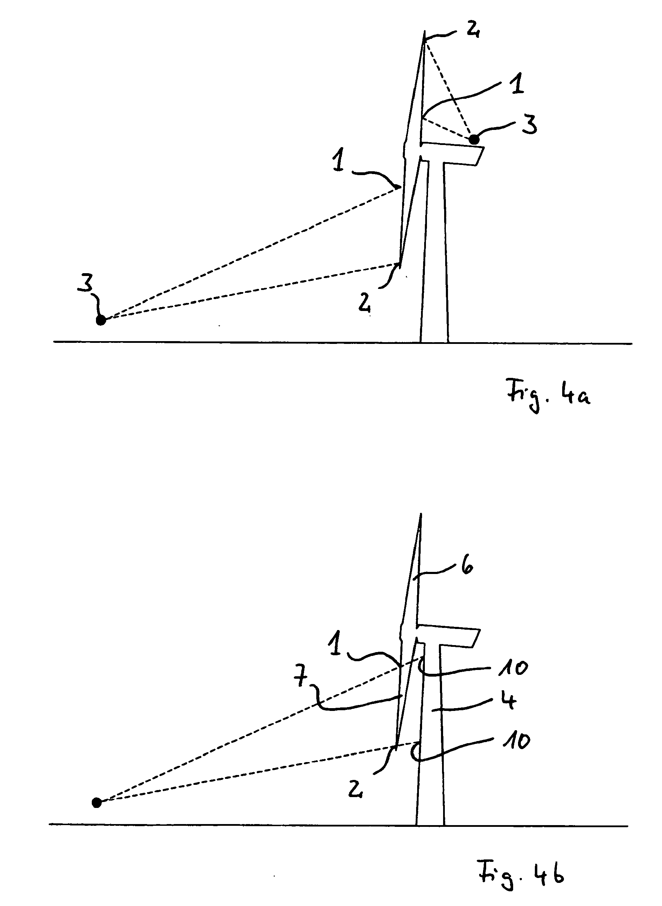

Fig. 4a zeigt eine Windenergieanlage wie in Fig. 1 und 2, jedoch mit zwei berührungslosen Messsystemen 3, jeweils ausgerichtet auf einen ersten Messpunkt 1 und einen zweiten Messpunkt 2. Dabei ist das berührungslose Messsystem 3, das auf der Gondel 5 angeordnet ist, nach oben ausgerichtet, während das berührungslose Messsystem 3, das vor der Anlage positioniert ist, auf den unteren Bereich der Rotationsebene ausgerichtet ist. Durch die Kombination der Messwerte lassen sich Profile sowohl von der Vorderansicht des Rotorblattes auch als von der Rückansicht des Rotorblattes generieren. Zwar werden diese Messwerte an verschiedenen Stellen genommen, doch lassen sie sich leicht einander zuordnen.

Fig. 4b zeigt eine Windenergieanlage mit Turm 4 mit berührungslosem Abstandsmesssystem 3. Dabei ist das berührungslose Abstandsmesssystem 3 auf zwei Messpunkte 1, 2 ausgerichtet. Wenn kein Rotorblatt 6, 7 die Sicht auf den Turm 4 versperrt, vermisst das berührungslose Abstandsmesssystem 3 den Turm 4 an den Turmmesspunkten 10. Dadurch können die Neigung des Turms als auch der Abstand zwischen Turm 4 und berührungslosem Abstandsmesssystem 3 ermittelt werden.

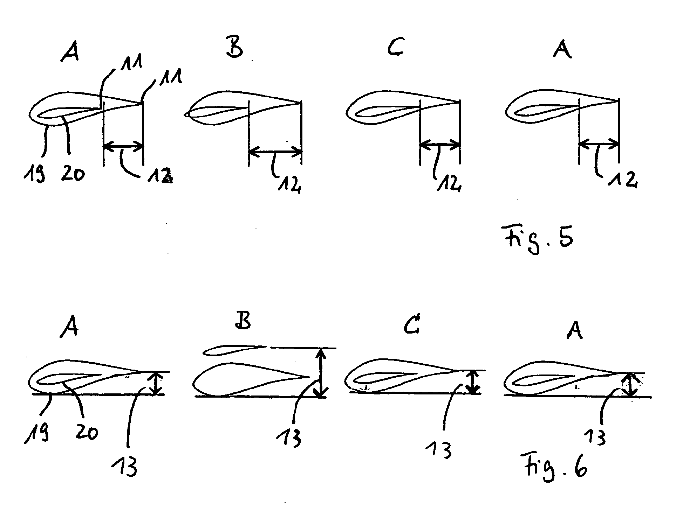

Fig. 5 zeigt aufbereitete Messdaten eines berührungslosen Abstandsmesssystems. Gezeigt sind Profildaten für die Rotorblätter A, B, C und noch einmal für das Rotorblatt A. Dabei haben die Rotorblätter A, B, C, A die entsprechenden Messpunkte nacheinander passiert und es wurden zwei Profillinien 19, 20 eines jeden Rotorblattes aufgenommen. Diese sind hier überlagert dargestellt und gekennzeichnet ist der Abstand der Hinterkante 11 der einzelnen Profillinien 19, 20. Dabei handelt es sich um die edgewise Verbiegung 12. Zu erkennen ist, dass diese bei den Rotorblättern A, B, A sehr ähnlich aussehen. Nur Rotorblatt B fällt deutlich aus dem Rahmen. Daran ist zu erkennen, das Rotorblatt B in seiner Steifigkeit bzw. seiner Anordnung im Rotor deutlich abweicht.

Fig. 6 zeigt erneut jeweils zwei Profillinien 19, 20 der Rotorblätter A, B, C, A, und es ist die maximale Profiltiefe 13 gekennzeichnet, die Aufschluss über die flapwise Verbiegung gibt.

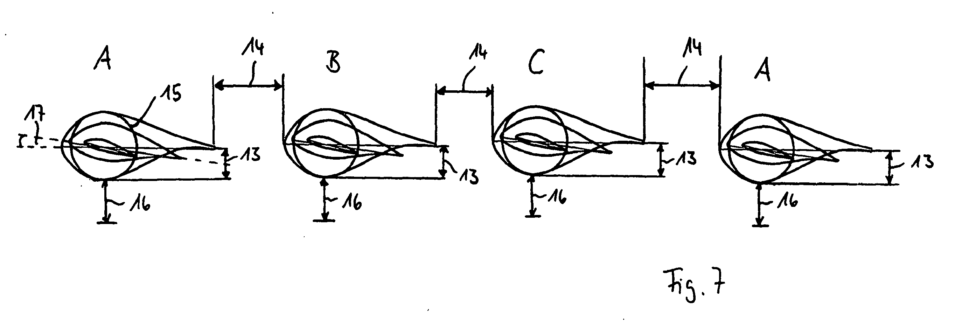

Fig. 7 zeigt jeweils drei Profillinien der Rotorblätter A, B, C, A. Darin eingezeichnet ist ein Kreis 15 um die errechnete Pitchachse. Des Weiteren eingezeichnet sind die Anstelllinien der einzelnen Profile. Ein Anstellwinkel bzw. Pitch 17 wurde eingezeichnet. Kenntlich gemacht wurde darüber hinaus die Teilung 14 sowie die maximale Profiltiefe 13 und ein Abstand 16 zu einem vordefinierten Punkt / einer vordefinierten Ebene.

Zu erkennen sind in einer solchen Darstellung nicht nur die Abweichung der Teilung und Unterschiede in der maximalen Profiltiefe, sondern beispielsweise auch sehr deutlich Torsionen im Rotorblatt, die sich dadurch zeigen, dass die Anstellwinkel der einzelnen Profillinien eines Rotorblattes deutlich unterschiedlich ausfallen.

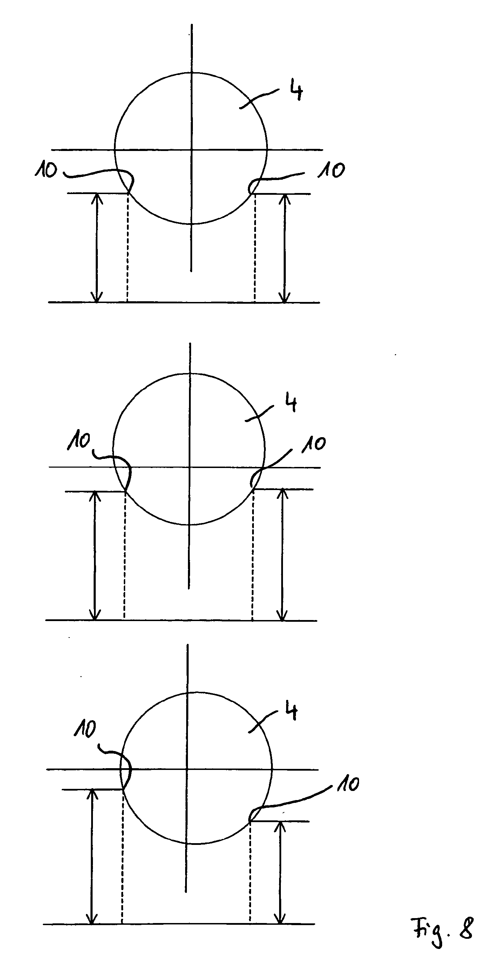

Fig. 8 zeigt drei Ansichten eines Querschnitts durch einen Turm mit gestrichelt gezeichneten Messlinien, die auf Turmmesspunkten 10 auftreffen. Ebenfalls eingezeichnet ist ein Kreuz im Turmquerschnitt, das die Ruhelage des Turms angibt. In der oberen Abbildung befindet sich der Turm in der Ruhelage. Beide Turmmesspunkte 10 weisen die gleiche Entfernung zur Abstandsmessvorrichtung auf. In dem mittleren Bild der Fig. 8 ist der Turm von der Entfernungsmessvorrichtung weg verschoben. Dadurch haben sich die Turmmesspunkte 10 nach hinten verlagert, was erfasst werden kann.

In der unteren Darstellung der Fig. 8 ist der Turm nach rechts verlagert. Dadurch haben sich die Turmmesspunkte 10 unterschiedlich verlagert und sind die Entfernungen zu diesen unterschiedlich geworden.

Durch eine solche Vermessung an zwei Punkten eines Querschnitts lässt sich somit die Bewegung des Turmes in der entsprechenden Ebene erfassen.

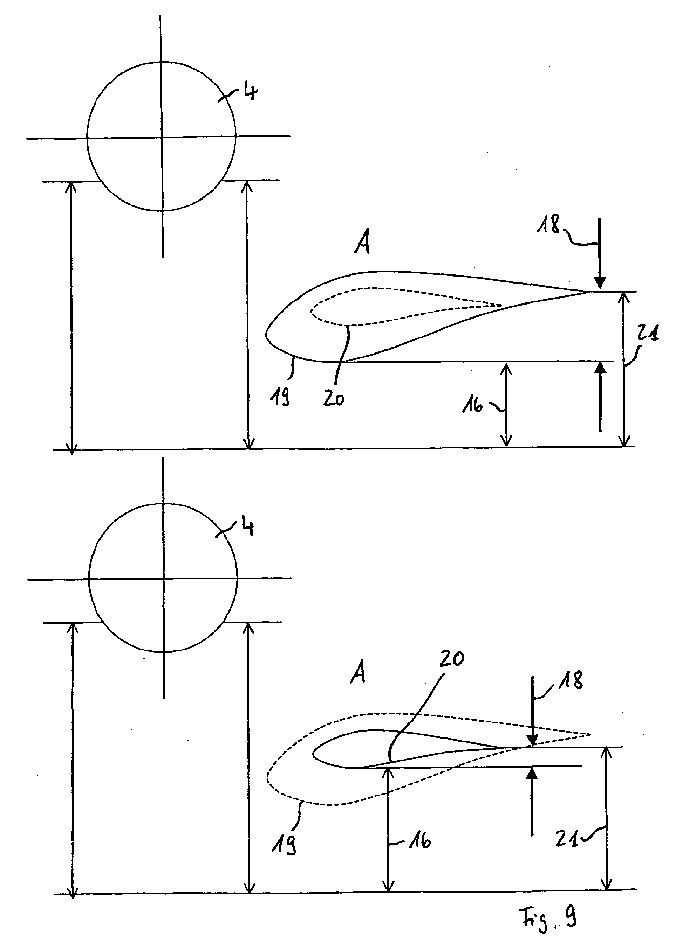

Fig. 9 zeigt einen Turmquerschnitt durch einen Turm 4 mit einem die Ruhelage andeutenden Kreuz wie in Fig. 8. Daneben dargestellt sind zwei Profillinien 19, 20. In der oberen Darstellung wurde die erste Profillinie 19 zur Vermessung verwendet, in der unteren Darstellung die zweite Profillinie 20. Kenntlich gemacht sind der absolute Abstand 16, sowie der Abstand der Hinterkante 11 zum gleichen Referenzpunkt / Ebene sowie die Profiltiefe des jeweiligen Profils.

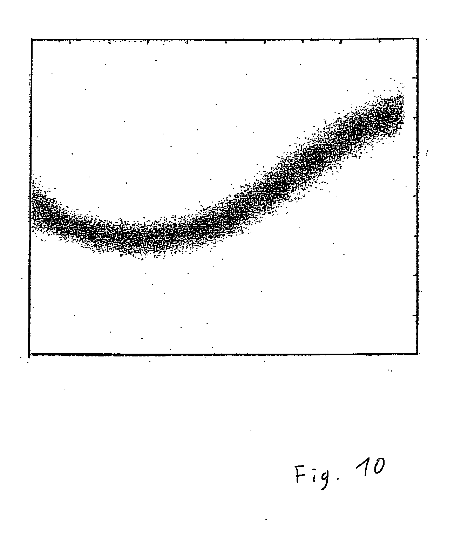

Fig. 10 zeigt Messwerte über eine Profillinie über ein Rotorblatt. Es wurden bei einer Vielzahl von Umdrehungen des Rotors an einem Messpunkt zahlreiche Profile über die Profillinie aufgenommen und gemeinsam dargestellt. Dargestellt ist auf der horizontalen Achse die Erstreckung des Rotorblattes in der Rotationsebene in Rotationsrichtung, also die Profillinie, und auf der vertikalen Achse die Entfernung der Oberfläche des Rotorblatts zum Abstandmesssystem, also das Profil. Vor der weiteren Analyse empfiehlt es sich über statistische Methoden eine Mittelung durchzuführen. Im einfachsten Fall wird der arithmetische Mittelwert des Abstandes an jedem Punkt der Profillinie berechnet.

In einer solchen Darstellung lässt sich nicht nur die Verbiegung des Rotorblattes ermitteln, sondern auch seine Lage relativ zum Turm 4 erfassen.

Weitere vorteilhafte Ausbildungen lassen sich durch den Fachmann für den jeweiligen Anwendungszweck angepasst leicht auffinden.

### Bezugszeichenliste

- 1.: Erster Messpunkt
- 2.: Zweiter Messpunkt
- 3.: Abstandsmesssystem
- 4.: Turm
- 5.: Gondel
- 6.: Erstes Rotorblatt
- 7.: Zweites Rotorblatt
- 8.: Erste Profillinie
- 9.: Zweite Profillinie
- 10.: Messpunkt auf Turm
- 11.: Hinterkante
- 12.: Edgewise Verbiegung
- 13.: Maximale Profiltiefe
- 14.: Teilung
- 15.: Kreis um Drehachse
- 16.: Abstand
- 17.: Pitch
- 18.: Profiltiefe
- 19.: Erstes Profil
- 20.: Zweites Profil
- 21.: Abstand der Hinterkante
- A: Rotorblatt A
- B: Rotorblatt B
- C: Rotorblatt C

## Patentansprüche

1. Messverfahren zur Kontrolle und/oder Optimierung von Windenergieanlagen, aufweisend mindestens ein lang gestrecktes, an einer Nabe gelagertes Rotorblatt (6, 7), umfassend
a. Ausrichten eines berührungslosen Abstandmesssystems (3), geeignet zur um maximal 200 ms zeitversetzten Erfassung von mindestens zwei Abständen (16) an verschiedenen Punkten, auf mindestens zwei Messpunkte (1, 2), die von dem mindestens einen Rotorblatt (6, 7) überstrichen werden und unterschiedliche Abstände (16) zur Nabe aufweisen;
b. Bestimmen von mindestens zwei Profilen (19, 20) über das mindestens eine Rotorblatt (6, 7) entlang jeweils einer Profillinie (8, 9), wobei die mindestens zwei Profillinien (8, 9) über die Punkte des Rotorblatts (6, 7) verlaufen, die die mindestens zwei Messpunkte (1, 2) überstreichen.

2. Messverfahren nach Anspruch 1 weiter umfassend das Ermitteln mindestens einer Biegung, Steifigkeit und/oder Torsion (12) des mindestens einen Rotorblatts (6, 7) auf Basis der mindestens zwei Profile (19, 20).

3. Messverfahren nach einem der vorstehenden Ansprüche, wobei die edgewise und/oder flapwise Biegung (12) des mindestens einen Rotorblatts (6, 7) zwischen den mindestens zwei Profilen (19, 20) bestimmt wird.

4. Messverfahren nach einem der vorstehenden Ansprüche, wobei die Torsion zwischen den mindestens zwei Profilen (19, 20) bestimmt wird.

5. Messverfahren nach einem der vorstehenden Ansprüche, wobei auf Basis mindestens eines Profils (19, 20) die Pitchachse (17) des Rotorblattes bestimmt (6, 7) wird.

6. Messverfahren nach einem der vorstehenden Ansprüche, wobei der Konuswinkel des mindestens einen Rotorblatts (6, 7) bestimmt wird

7. Messverfahren nach einem der vorstehenden Ansprüche, wobei die Windenergieanlage mindestens zwei Rotorblätter (6, 7) umfasst und die Teilung (14), insbesondere die Abweichung von einer vorgesehnen Teilung (14), bestimmt wird.

8. Messverfahren nach einem der vorstehenden Ansprüche, wobei die Windenergieanlage eine Gondel (5) umfasst und das Abstandsmesssystem (3) auf der Gondel (5) positioniert wird und insbesondere auch Turmschwingungen erfasst werden.

9. Messverfahren nach einem der Ansprüche 1 bis 7, wobei das Abstandsmesssystem (3) entfernt von der Windenergieanlage positioniert wird und insbesondere auch der Abstand (16) des Abstandsmesssystems (3) zur Nabe und/oder zu einem Punkt des Turms (10) und die Neigung des Turms (4) bestimmt wird.

10. Windenergieanlage aufweisend mindestens ein lang gestrecktes, an einer Nabe gelagertes Rotorblatt (6, 7) und beinhaltend ein Messsystem zur Kontrolle und/oder Optimierung der Windenergieanlage, umfassend ein berührungsloses Abstandmesssystem (3),
a. aufweisend Ausrichtungsmittel zur Ausrichtung auf mindestens zwei Messpunkte (1, 2) mit unterschiedlichem Abstand (1 6) zur Nabe, die von dem mindestens einen Rotorblatt (6, 7) überstrichen werden und
b. geeignet zur zeitgleichen Erfassung von mindestens zwei Profilen (19, 20) über das mindestens eine Rotorblatt (6, 7) entlang jeweils einer Profillinie (8, 9) durch um maximal 200 ms zeitversetzte Erfassung von Abständen (16) an den mindestens zwei Messpunkten (1, 2), wobei die mindestens zwei Profillinien (8, 9) über die Punkte des Rotorblatts (6, 7) verlaufen, die die mindestens zwei Messpunkte (1, 2) überstreichen.

## Claims

1. A measurement method for controlling and/or optimizing wind power plants, having at least one longitudinally extended rotor blade (6, 7) mounted on a hub, comprising
a. aligning a contactless distance measuring system (3) suited for measuring, offset in time by a maximum of 200 ms, at least two distances (16) at different points, on at least two measurement points (1, 2), which are swept over by the at least one rotor blade (6, 7) and have different distances (16) to the hub;
b. determining at least two profiles (19, 20) using the at least one rotor blade (6, 7) along each profile line (8, 9), wherein the at least two profile lines (8, 9) run over the points of the rotor blade (6, 7), which sweep over the at least two measurement points (1, 2).

2. The measurement method according to claim 1 further comprising determining at least one curvature, stiffness and/or torsion (12) of the at least one rotor blade (6, 7) based on the at least two profiles (19, 20).

3. The measurement method according to one of the preceding claims, wherein the edge wise and/or flap wise curvature (12) of the at least one rotor blade (6, 7) is determined between the at least two profiles (19, 20).

4. The measurement method according to one of the preceding claims, wherein the torsion is determined between the at least two profiles (19, 20).

5. The measurement method according to one of the preceding claims, wherein the pitch axis (17) of the rotor blade (6, 7) is determined based on at least one profile (19, 20).

6. The measurement method according to one of the preceding claims, wherein the cone angle of the at least rotor blade (6, 7) is determined.

7. The measurement method according to one of the preceding claims, wherein the wind power plant comprises at least two rotor blades (6, 7) and the spacing (14), in particular the deviation, from a predefined spacing (14), is determined.

8. The measurement method according to one of the preceding claims, wherein the wind power plant comprises a nacelle (5) and the distance measuring system (3) is positioned on the nacelle (5) and in particular also measures tower oscillations.

9. The measurement method according to one of the claims 1 to 7, wherein the distance measuring system (3) is positioned removed from the wind power plant, and in particular the distance (16) of the distance measuring system (3) to the hub and/or to a point of the tower (10) and the inclination of the tower (4) is also determined.

10. A wind power plant having at least one longitudinally extended rotor blade (6, 7) mounted on a hub, and containing a measurement system for controlling and/or optimizing the wind power plant, comprising a contactless distance measuring system (3),
a. having aligning means for the alignment of at least two measurement points (1, 2) with different distance (16) to the hub that are swept over by the at least one rotor blade (6, 7), and
b. suited for simultaneously measuring at least two profiles (19, 20) over the at least one rotor blade (6, 7) along each profile line (8, 9), by measuring, offset in time by a maximum of 200 ms, at least two distances (16) at the at least two measurement points (1, 2), wherein the at least two profiles lines (8, 9) run over the points of the rotor blade (6, 7) which sweep over the at least two measurement points (1, 2).

## Revendications

1. Procédé de mesure pour contrôler et/ou optimiser des installations d'énergie éolienne, comportant au moins une pale de rotor (6, 7) de forme allongée et montée sur un moyeu, le procédé consistant à :
a. aligner un système (3) de mesure de distance sans contact adapté pour l'enregistrement, différé de 200 ms au maximum, d'au moins deux distances (16) à différents points, sur au moins deux points de mesure (1, 2) qui sont balayés par ladite au moins une pale de rotor (6, 7) et pour lesquels les distances (16) jusqu'au moyeu sont différentes ; et
b. établir au moins deux profils (19, 20) à l'aide de ladite au moins une pale de rotor (6, 7) le long d'une ligne de profil (8, 9) respective, dans lequel lesdites au moins deux lignes de profil (8, 9) passent au-dessus des points de la pale de rotor (6, 7) qui balaient lesdits au moins deux points de mesure (1, 2).

2. Procédé de mesure selon la revendication 1, consistant en outre à déterminer au moins une flexion, une raideur et/ou une torsion (12) de ladite au moins une pale de rotor (6, 7) sur base desdits au moins deux profils (19, 20).

3. Procédé de mesure selon l'une des revendications précédentes, dans lequel la flexion (12) de ladite au moins une pale de rotor (6, 7) dans le plan du rotor et/ou hors du plan du rotor est établie entre lesdits au moins deux profils (19, 20).

4. Procédé de mesure selon l'une des revendications précédentes, dans lequel la torsion est établie entre lesdits au moins deux profils (19, 20).

5. Procédé de mesure selon l'une des revendications précédentes, dans lequel l'axe de tangage de la pale de rotor (6, 7) est établi sur base d'au moins un profil (19, 20).

6. Procédé de mesure selon l'une des revendications précédentes, dans lequel l'angle de conicité de ladite au moins une pale de rotor (6, 7) est établi.

7. Procédé de mesure selon l'une des revendications précédentes, dans lequel l'installation d'énergie éolienne comporte au moins deux pales de rotor (6, 7) et l'espacement (14), en particulier l'écart par rapport à un espacement (14) prévu, est établi.

8. Procédé de mesure selon l'une des revendications précédentes, dans lequel l'installation d'énergie éolienne comporte une nacelle (5), et le système (3) de mesure de distance est positionné sur la nacelle (5) et mesure aussi en particulier les vibrations du mât.

9. Procédé de mesure selon l'une des revendications 1 à 7, dans lequel le système (3) de mesure de distance est positionné à distance de l'installation d'énergie éolienne, et dans lequel la distance (16) du système (3) de mesure de distance jusqu'au moyeu et/ou jusqu'à un point du mât (10) ainsi que l'inclinaison du mât (4) sont en particulier établies.

10. Installation d'énergie éolienne comportant au moins une pale de rotor (6, 7) de forme allongée montée sur un moyeu et comprenant un système de mesure pour contrôler et/ou optimiser l'installation d'énergie éolienne, comportant un système (3) de mesure de distance sans contact,
a. comprenant un moyen d'alignement pour aligner sur au moins deux points de mesure (1, 2) à des distances (16) différentes jusqu'au moyeu, qui sont balayés par ladite au moins une pale de rotor (6, 7), et
b. adapté à l'enregistrement simultané d'au moins deux profils (19, 20) sur ladite au moins une pale de rotor (6, 7) le long d'une ligne (8, 9) de profil respective par l'enregistrement, différé de 200 ms au maximum, de distances (16) auxdits au moins deux points de mesure (1, 2), dans laquelle lesdites au moins deux lignes de profil (8, 9) passent des points de la pale de rotor (6, 7) qui balaient lesdits au moins deux points de mesure (1, 2).
